# EUROPEAN PATENT APPLICATION

(11) **EP 4 082 719 A1**
(43) Date of publication of application: **02.11.2022**
(21) Application number: 20908116.5
(22) Date of filing: 17.12.2020
(51) Int. Cl.: B24D 7/10, B24B 41/04, B23B 5/16, B23F 19/10

(54) **SPLICED CHAMFERING DEVICE**

(30) Priority: 27.12.2019 CN 201911372377; 27.12.2019 CN 201922391112 U
(71) Applicant: Guilin Champion Union Diamond Co., Ltd., Guilin, Guangxi 541004 (CN)
(72) Inventor: SONG, Jingxin, Guilin, Guangxi 541004 (CN); LONG, Huiling, Guilin, Guangxi 541004 (CN); YE, Yong, Guilin, Guangxi 541004 (CN); LIANG, Anning, Guilin, Guangxi 541004 (CN); WANG, Zhiyong, Guilin, Guangxi 541004 (CN); QIN, Fengming, Guilin, Guangxi 541004 (CN)
(74) Representative: Zaboliene, Reda
(86) International application number: PCT/CN2020/137273
(87) International publication number: WO 2021/129513

(57) **Abstract**

The present invention relates to a split-type chamfering device. The split-type chamfering device includes a base and a plurality of thin toothed sheets, wherein all the thin toothed sheets are fixedly spliced on a sidewall of a lower part of the base to form a conical chamfering body, lower parts of all the thin toothed sheets extend to a lower side of the base, sides, close to the base, of the lower parts of all the thin toothed sheets are abutted against each other, and a drainage groove communicated with a water passage hole inside the base is formed between two adjacent thin toothed sheets. The present invention has the following benefits: the chamfering device is formed by splicing the plurality of thin toothed sheets, and the drainage groove is formed between every two adjacent thin toothed sheets, so that the drainage grooves are densely distributed on a working surface of the chamfering device, and cooling water drained outward by the drainage grooves can completely cover the working surface, thereby improving the working efficiency and prolonging a service life of the chamfering device. In addition, the deformation rates of respective radial points approximate one another through relative comparison, and the deformation problem is alleviated, thereby prolonging the service life of the chamfering device.

## Description

### TECHNICAL FIELD

The present invention relates to the field of processing tools of abrasive tools, and in particular to a split-type chamfering device.

### BACKGROUND

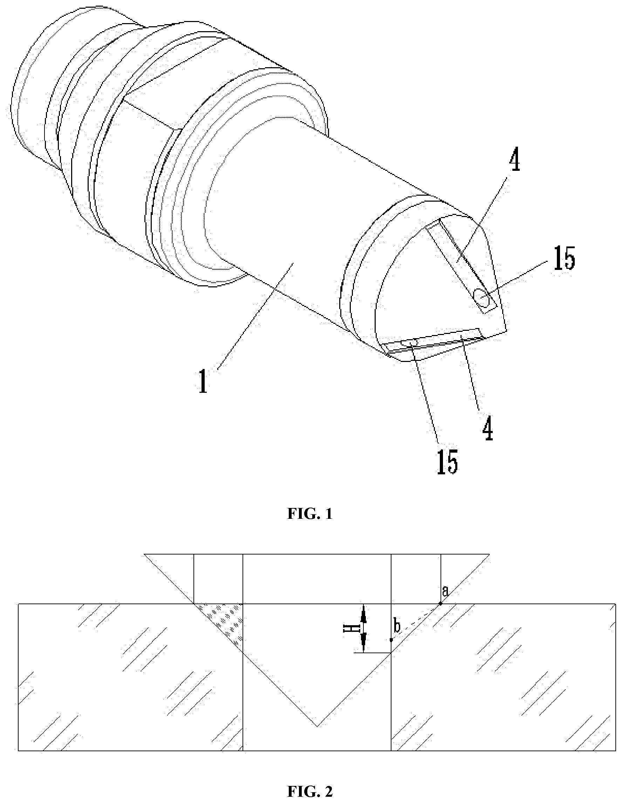

As shown in FIG. 1, for an existing chamfering device (a chamfering grinding head or a chamfering sleeve that can be used with a drill bit) of a conical integrated structure, several drainage grooves 4 are disposed in a conical surface of the chamfering device, a drainage hole 15 being communicated with the inside of the chamfering device and draining water outward is disposed in the drainage groove 4, and during chamfering, cold water is drained outward through the drainage holes 15 to achieve a cooling effect. Axial heights of the drainage holes 15 are different to drain water in different directions. The above chamfering device of the integrated structure has the following defects.

(1) Since the drainage holes 15 cannot be disposed densely in the entire conical surface of the chamfering device, the cold water drained outward from the drainage holes 15 cannot completely cover a working surface of the chamfering device, resulting in incomplete cooling.

(2) Due to the different axial heights of the drainage holes 15, when a processed surface is just located between an upper drainage hole 15 and a lower drainage hole 15, the cold water drained from the drainage holes 15 cannot reach the processed surface for cooling.

(3) In a machining process, machining amounts of the chamfering device at different positions in an axial direction are different. As shown in FIG. 2, on the chamfering device, since the machining amount at a position *a* is greater than the machining amount at a position *b,* a wear amount at the position *a* is greater than the wear amount at the position *b,* that is, the longer a grinding distance H on the chamfering device is, the greater the wear is. As a result, the wear at different positions cannot be synchronized (identical), and finally the chamfering device is deformed (the dotted line in FIG. 2).

(4) The circumference of each radial point at the working surface of the chamfering device increases as a diameter increases, that is, wear resistance and deformation resistance increase as the diameter increases, but the machining amount of the circumference of each radial point increases as the diameter decreases, that is, the wear amount increases as the diameter decreases, and the smaller the diameter of a radial position is, the easier the radial position is to deform.

### SUMMARY

In summary, in order to overcome the defects of the prior art, the technical problem to be solved by the present invention is to provide a split-type chamfering device.

The present invention adopts the following technical solution to solve the above technical problem. A split-type chamfering device includes a base and a plurality of thin toothed sheets, wherein all the thin toothed sheets are fixedly spliced on a sidewall of a lower part of the base to form a conical chamfering body, lower parts of all the thin toothed sheets extend to the lower side of the base, one sides of the lower parts of all the thin toothed sheets close to the base are abutted against one another, and a drainage groove communicated with a water passage hole inside the base is formed between two adjacent thin toothed sheets.

The present invention has the following benefits. The chamfering device is formed by splicing the plurality of thin toothed sheets, and the drainage groove is formed between every two adjacent thin toothed sheets, so that the drainage grooves are densely distributed on the working surface of the chamfering device, and cooling water drained outward by the drainage grooves can completely cover the working surface, thereby improving the working efficiency and prolonging a service life of the chamfering device. In addition, the thin toothed sheets at respective radial points of the working surface are consistent in circumferential thickness, and equal in circumferential cumulative arc length, that is, the wear resistance and deformation resistance are consistent; and the machining amount and wear amount of the circumference of each radial point of the working surface increase as the diameter decreases, but when the chamfering device according to the present invention is compared with the chamfering device in the prior art, the deformation rates of the respective radial points approximate to one another through relative comparison, so that the deformation problem is alleviated. Thus, the service life of the chamfering device is prolonged.

On the basis of the above technical solution, the present invention may also be improved as follows.

Further, the sidewall of the base is provided with insertion holes for insertion of upper sides of the thin toothed sheets, and water supply grooves communicating the water passage hole with the drainage grooves are disposed in positions on the sidewall of the base corresponding to lower sides of the insertion holes.

The benefit of adopting the above further solution is as follows: the water passage hole is communicated with the drainage grooves.

Further, a clamping block is disposed on one side of the middle of the thin toothed sheet, and a clamping groove is disposed at a position on the sidewall of the base corresponding to the clamping block; a nut is disposed at a position on the base corresponding to upper sides of the thin toothed sheets in a threaded sleeving manner, and the nut presses the upper ends of the thin toothed sheets downward to fix the thin toothed sheets at corresponding positions of the base.

The benefits of adopting the above further solution are as follows: the assembly and positioning of the clamping blocks are facilitated, and the thin toothed sheets are fixed onto the base.

Further, a drainage channel being communicated with the water passage hole and draining water outward is disposed in the lower part of the thin toothed sheet.

The benefit of adopting the above further solution is as follows: drainage at the lower parts of the thin toothed sheets is ensured.

Further, the drainage channel is a semi-circular hole, and there is a plurality of drainage channels which are disposed in the lower part of the thin toothed sheet in parallel with an axial direction and at upper and lower positions respectively.

The benefits of adopting the above further solution are as follows: the drainage at the lower parts of the thin toothed sheets can be ensured, and the thin toothed sheets are prevented from losing strength due to the too small thickness.

Further, the split-type chamfering device further includes a water blocking mechanism axially blocking cold water in the water passage hole, so that the cold water in the water passage hole is radially drained to the drainage grooves after passing through the water supply grooves, the water blocking mechanism being mounted on the base.

Further, the water blocking mechanism includes a central shaft and a blocking cover, wherein an upper end of the central shaft is fixed in the water passage hole, a lower end of the central shaft protrudes out of the water passage hole, and there is a gap between the central shaft and an inner wall of the water passage hole; and the blocking cover is fixed on the lower end of the central shaft and is attached to the thin toothed sheets to axially block the cold water in the water passage hole.

The benefit of adopting the above further solution is as follows: the cold water is radially drained to cool the working surface.

Further, the split-type chamfering device further includes a connector, wherein one end of the connector is connected to a main shaft of a machine tool, the other end of the connector is connected to one end of the base away from the thin toothed sheets, and a water supply hole communicating an external water source with the water passage hole is disposed inside the connector.

The benefit of adopting the above further solution is as follows: the chamfering device is connected to the main shaft of the machine tool.

Further, the upper end of the central shaft extends inside the water supply hole, a screw hole is horizontally disposed at a position inside the connector corresponding to the upper end of the central shaft, and a screw pressing the upper end of the central shaft to fix the central shaft is disposed in the screw hole.

The benefit of adopting the above further solution is as follows: the central shaft is fixed, so that the central shaft has an upward pressing effect on the thin toothed sheets.

Further, a part of the upper end of the central shaft corresponding to the screw is a plane structure.

The benefit of adopting the above further solution is as follows: an extrusion effect of the screw is improved.

### BRIEF DESCRIPTION OF THE DRAWINGS

FIG. 1 is a three-dimensional view of an existing chamfering grinding head;
FIG. 2 is a schematic diagram showing wear of the existing chamfering grinding head due to processing (the arc dotted line represents a shape of the worn chamfering grinding head);
FIG. 3 is an overall three-dimensional view of Embodiment 1 of the present invention;
FIG. 4 is an exploded view of Embodiment 1 of the present invention (with one thin toothed sheet reserved);
FIG. 5 is a sectional view of Embodiment 1 of the present invention (an arrow indicates a flow direction of cold water);
FIG. 6 is an enlarged view of part A of FIG. 5 (the straight and thick dotted line indicates a shape of the worn thin toothed sheet);
FIG. 7 is a sectional view of a base of Embodiment 1;
FIG. 8 is a three-dimensional view of a base, into which one thin toothed sheet is inserted, of Embodiment 1;
FIG. 9 is a three-dimensional view of Embodiment 1 of the present invention with only two thin toothed sheets reserved after removal of components such as a central shaft;
FIG. 10 is an enlarged view of part B of FIG. 9;
FIG. 11 is a three-dimensional view of Embodiment 2 of the present invention (without a holding ring);
FIG. 12 is an enlarged view of part C of FIG. 11;
FIG. 13 is a sectional view of FIG. 11; and
FIG. 14 is an exploded view of Embodiment 2 of the present invention (with one thin toothed sheet reserved).

In the accompanying drawings, a list of components represented by respective reference signs is as follows:
1, base; 2, thin toothed sheet, 3, water passage hole; 4, drainage groove; 5, insertion buckle; 6, water supply groove; 7, clamping block; 8, clamping groove; 9, drainage channel; 10, central shaft; 11, nut; 12, connector; 13, water supply hole; 14, screw hole; 15, drainage hole; 17, diamond; 18, cover plate; 19, aluminum pad; 20, holding ring; and 21, spare water groove.

### DETAILED DESCRIPTION

The principles and features of the present invention will be described below in combination with the accompanying drawings. The listed examples are only used to explain the present invention, but not to limit the scope of the present invention.

### Embodiment 1

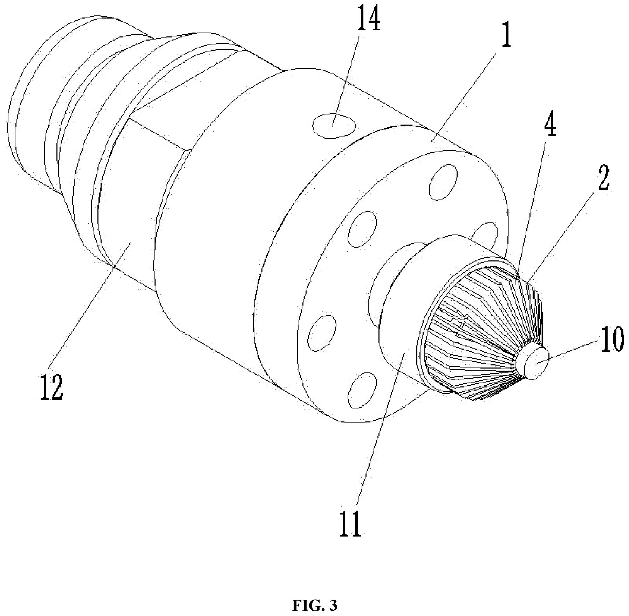

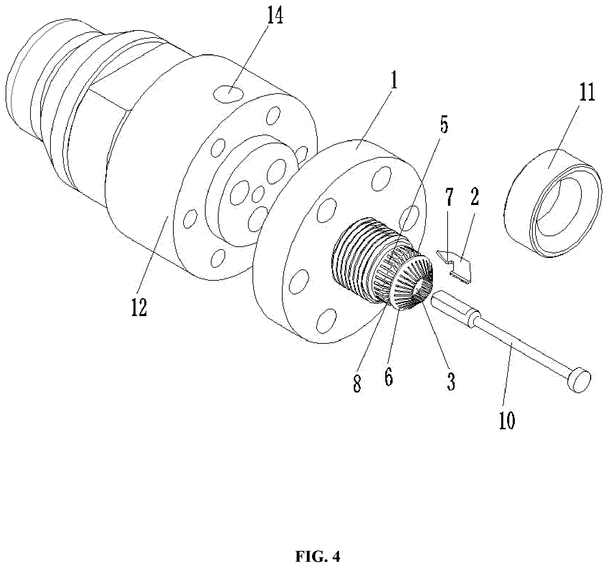

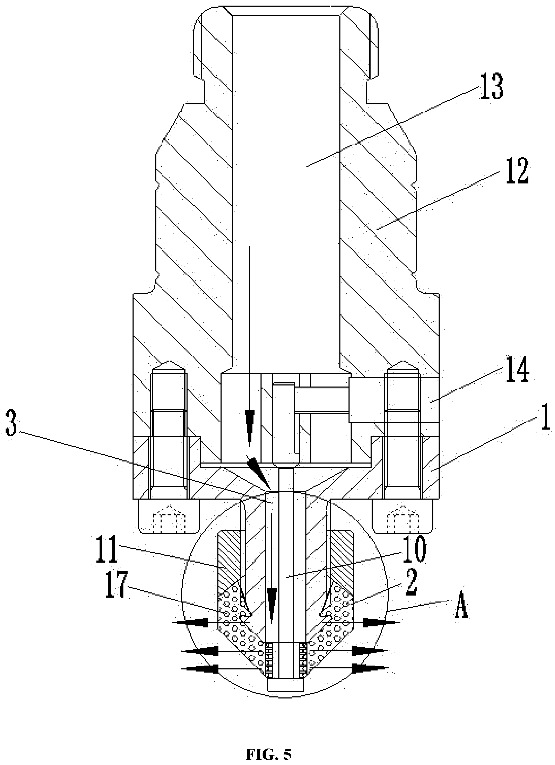

As shown in FIG. 3 to FIG. 5, a split-type chamfering grinding head includes a base 1 and a plurality of thin toothed sheets 2. Processing abrasive diamond particles 17 are disposed in the thin toothed sheets 2. All the thin toothed sheets 2 are fixedly spliced on a sidewall of a lower part of the base 1 to form a conical chamfering body, lower parts of all the thin toothed sheets 2 extend to a lower side of the base 1, one sides, close to the base 1, of the lower parts of all the thin toothed sheets 2 are abutted against one another, and a drainage groove 4 communicated with a water passage hole 3 inside the base 1 is formed between two adjacent thin toothed sheets 2. The chamfering grinding head is formed by splicing the plurality of thin toothed sheets 2, and the drainage groove 4 is formed between every two adjacent thin toothed sheets 2, so that the drainage grooves 4 are densely distributed on a working surface of the chamfering grinding head, and cooling water drained outward by the drainage grooves 4 can completely cover the working surface, thereby improving the working efficiency and prolonging a service life of the chamfering grinding head. In addition, the deformation rates of respective radial points approximate to one another through relative comparison, and the deformation problem is alleviated, thereby prolonging the service life of the chamfering device. The specific reasons are as follows:

In the present invention, a split-type structure of the thin toothed sheets 2 is adopted: a machining amount A of the circumference of a certain radial point of the working surface is equal to the circumference *L* of the point^{∗}an axial machining distance H of the point, and for the same chamfering device, the greater a radial diameter is, the greater the circumference *L* is, but the shorter the *H* is. For an abrasive entity of the working surface, cumulative arc lengths of the thin toothed sheets 2 on the circumference of respective radial points are *B*, and are approximately equal at respective position (approximately equal means that different radial points have slightly different arc lengths due to different curvature of arcs). As shown in FIG. 2, the cumulative arc length of the thin toothed sheet 2 on the circumference of a point a is *B₁*, and the cumulative arc length of the thin toothed sheet 2 on the circumference of a point *b* is *B₂,* wherein *B₁*=*B₂.* Therefore, *B* = n^{∗}1, (n is the number of the thin toothed sheets, and 1 is the circumferential arc length of the thin toothed sheet), and the abrasive entity is less correlated with a diameter change of the respective points.

The existing chamfering device of an integrated structure: the machining amount *A* of the circumference of a certain radial point of the working surface is equal to the circumference *L* of the point^{∗}the axial machining distance *H* of the point. For the abrasive entity of the working surface, the circumference *L* of each radial point is proportional to the diameter. As shown in FIG. 2, the circumference *L* at the point *a* is B₁, and the circumference L at the point *b* is *B₂,* wherein *B₁* > *B₂* (the diameter of the point *a* is greater than the diameter of the point *b*). Therefore, B = *L*, and the abrasive entity is greatly correlated with the diameter change of respective points.

For the chamfering device, the machining amount at a large end is less than that at a small end. Therefore, the deformation rate of the large end is less than that of the small end. In summary, when the present invention is compared with the prior art, the abrasive entity at the large end is reduced, so that the deformation rate of the large end increases and approximates to that of the small end, that is, the deformation problem of the chamfering device is alleviated, which prolongs the service life of the chamfering device. In addition, since the thin toothed sheets 2 at respective radial points of the working surface are consistent in circumferential thickness and equal in circumferential cumulative arc length, the wear resistance and deformation resistance are consistent.

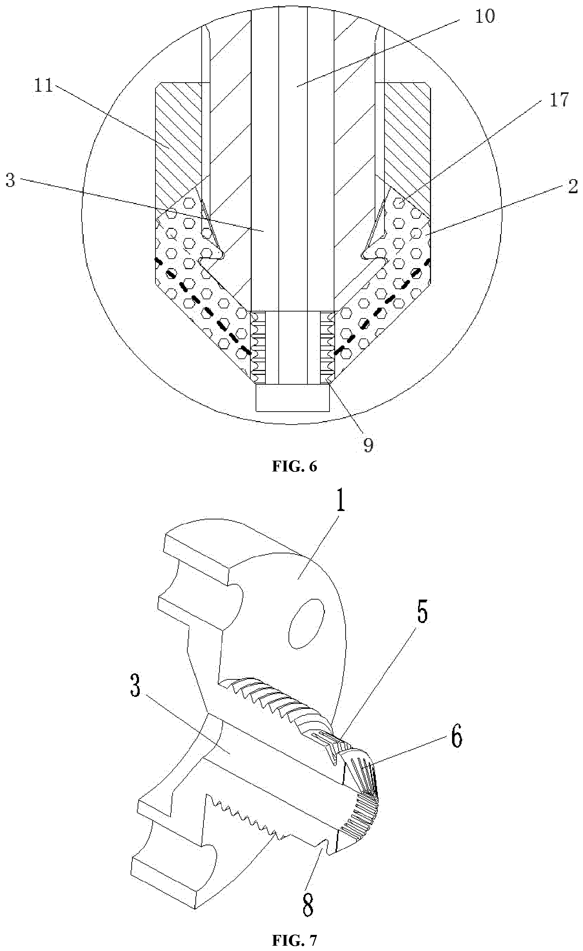

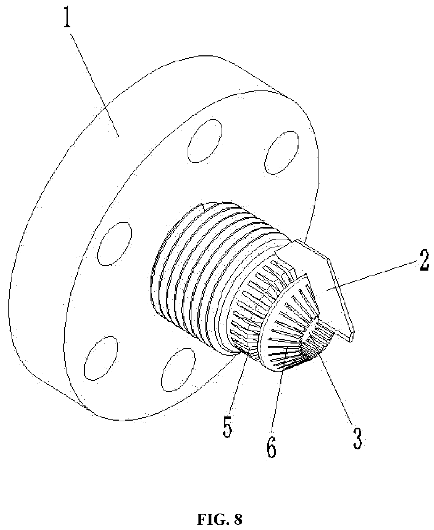

As shown in FIG. 7 and FIG. 8, the sidewall of the base 1 is provided with insertion holes 5 for insertion upper sides of the thin toothed sheets 2, and water supply grooves 6 communicating the water passage hole 3 with the drainage grooves 4 are disposed in positions on the sidewall of the base 1 corresponding to the lower sides of the insertion holes 5. A clamping block 7 is disposed on one side of the middle of the thin toothed sheet 2, and a clamping groove 8 is disposed at a position on the sidewall of the base 1 corresponding to the clamping block 7. A nut 11 is disposed at a position on the base 1 corresponding to the upper sides of the thin toothed sheets 2 in a threaded sleeving manner, and the nut 11 presses upper ends of the thin toothed sheets 2 downward to fix the thin toothed sheets 2 at corresponding positions of the base 1. The upper sides of the thin toothed sheets 2 are inserted into the insertion holes 5 of the base 1 to realize radial positioning of the thin toothed sheets 2. The clamping blocks 7 of the thin toothed sheets 2 are clamped in the clamping grooves 8, and the nut 11 is rotated to press the upper ends of the thin toothed sheets 2 downward, so as to realize axial positioning of the thin toothed sheets 2. Through the above manner, the thin toothed sheets 2 can be quickly and fixedly spliced onto the base 1, and the positioning is reliable.

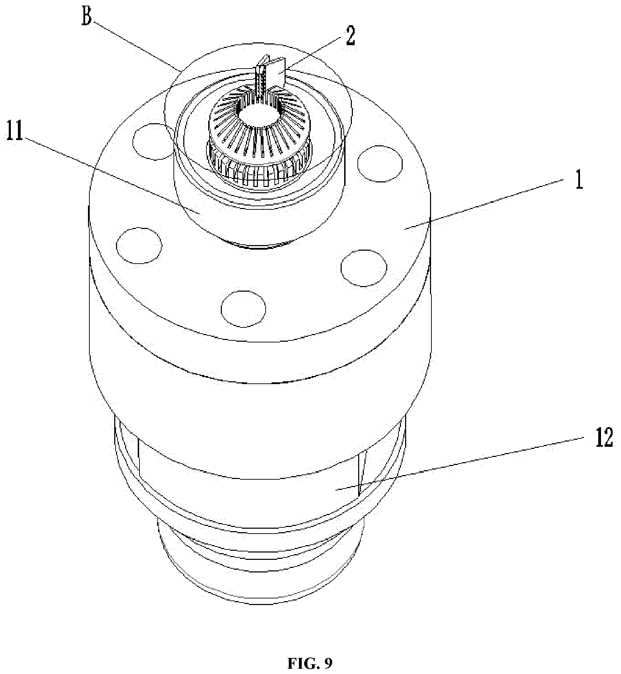

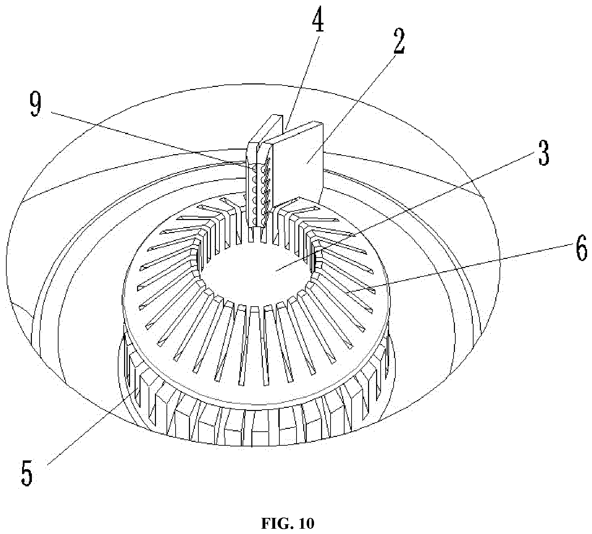

As shown in FIG. 9 and FIG. 10, a drainage channel 9 being communicated with the water passage hole 3 and draining water outward is disposed in the lower part of the thin toothed sheet 2. The drainage channels 9 ensure the drainage of the lower parts of the thin toothed sheets 2 even if the lower parts of the thin toothed sheets 2 are abutted against one another, thereby ensuring a cooling effect. Preferably, the drainage channel 9 is a semi-circular hole, and there is a plurality of drainage channels 9 which are disposed at the lower part of the thin toothed sheet 2 in parallel with an axial direction and at upper and lower positions respectively. The semi-circular holes, i.e., the drainage channels 9 can ensure the drainage of the lower parts of the thin toothed sheets 2, and can also prevent the thin toothed sheets 2 from losing strength due to their excessively small thickness.

The chamfering grinding head also includes a water blocking mechanism axially blocking cold water in the water passage hole 3, so that the cold water in the water passage hole 3 is radially drained to the drainage grooves 4 after passing through the water supply grooves 6. The water blocking mechanism is mounted on the base 1. The limiting mechanism includes a central shaft 10 and a blocking cover. An upper end of the central shaft 10 is fixed inside the water passage hole 3, a lower end of the central shaft 10 protrudes out of the water passage hole 3, and there is a gap between the central shaft 10 and an inner wall of the water passage hole 3. The blocking cover is fixed to the lower end of the central shaft 10 and is attached to the thin toothed sheets 2 to axially block the cold water in the water passage hole 3. The upper end of the central shaft 10 extends inside a water supply hole 13, a screw hole 14 is horizontally disposed at a position inside a connector 12 corresponding to the upper end of the central shaft, and a screw pressing the upper end of the central shaft 10 to fix the central shaft 10 is disposed in the screw hole. A part of the upper end of the central shaft 10 corresponding to the screw is a plane structure. One end of the connector 12 is connected to a main shaft of a machine tool, the other end of the connector 12 is connected to one end of the base 1 away from the thin toothed sheets 2, and the water supply hole 13 communicating an external water source with the water passage hole 3 is disposed inside the connector 12. The external water source firstly enters the water supply hole 13 and then reaches the water passage hole 3. A part of the cold water in the water passage hole 3 will pass through the water supply grooves 6 and is drained outward through the drainage grooves 4 to cool the working surface, and the other part of the cold water is drained outward through the drainage channels 9 to cool the working surface, so that a cooling area can cover the entire working surface to ensure the cooling effect.

### Embodiment 2

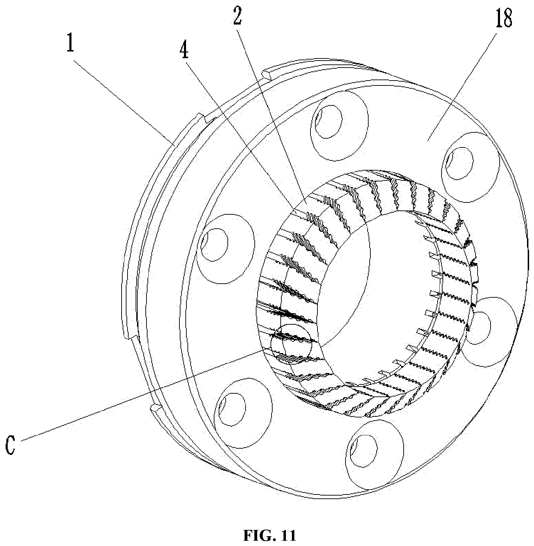

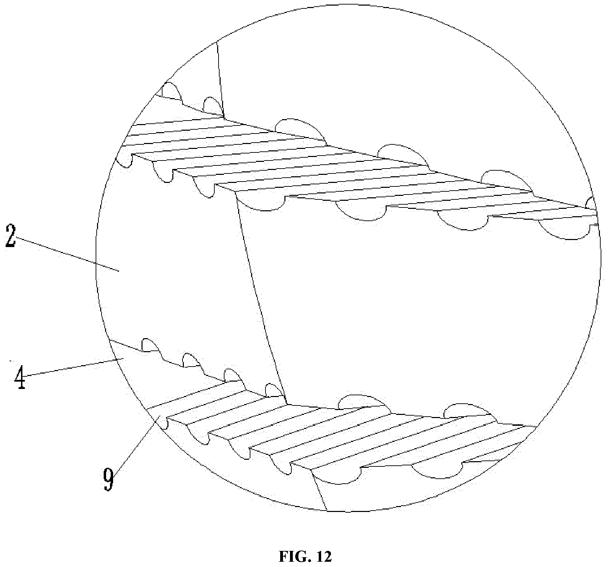

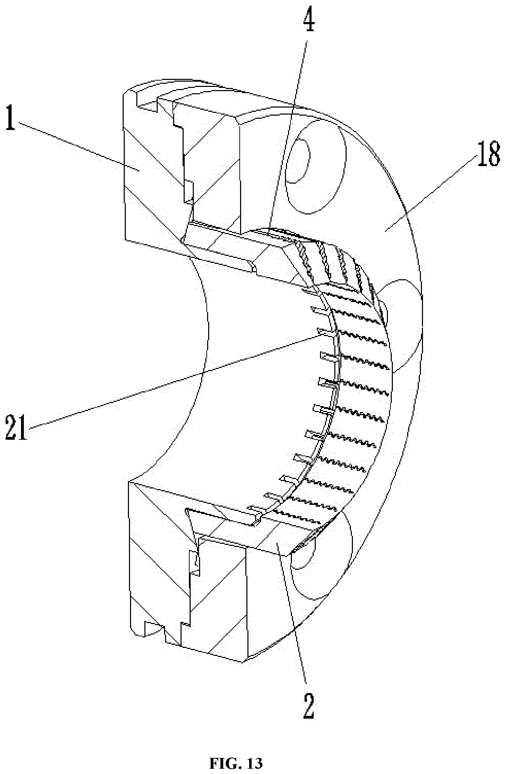

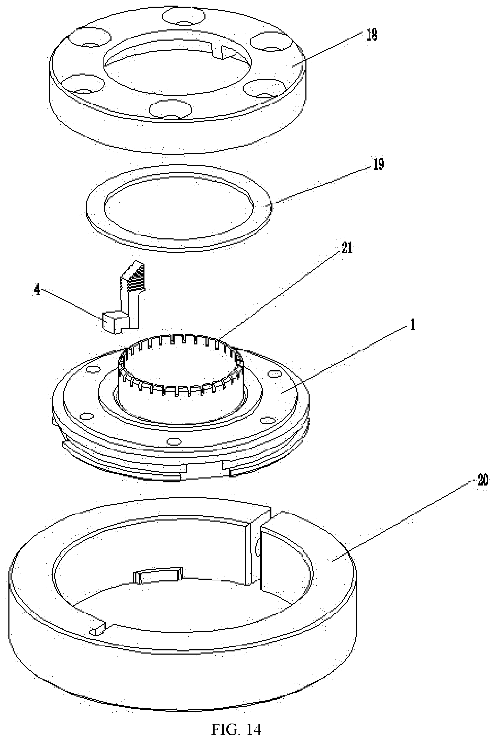

The split-type structure of the thin toothed sheets 2 in Embodiment 1 may also be applied to a chamfering sleeve that can be used with a drill bit. As shown in FIG. 11 to FIG. 14, the thin toothed sheets 2 are also fixedly spliced on the sidewall of the lower part of the base 1 through a cover plate 18 and an aluminum pad 19 to form a conical chamfering body. The base 1 is connected to a main shaft of a corresponding machine tool through a holding ring 20, the drainage groove 4 communicated with the water passage hole 3 inside the base 1 is formed between two adjacent thin toothed sheets 2, and drainage channels 9 being communicated with the water passage hole 3 and draining water outward are disposed in the lower part of the thin toothed sheet 2. Through the above structure, for the chamfering sleeve, the drainage groove 4 and the drainage channel 9 are also formed between every two adjacent thin toothed sheets 2, so that the drainage grooves 4 and the drainage channels 9 are densely distributed on a working surface of the chamfering sleeve, and the cooling water drained outward by the drainage grooves 4 and the drainage channels 9 can completely cover the working surface, which also has the advantages of improving the working efficiency and prolonging the service life of the chamfering sleeve. In addition, spare water grooves 21 are formed in the lower part of the base 1. The function of the spare water grooves 21 is that after the thin toothed sheets 2 are worn to a certain extent (when the spare water grooves 21 are exposed), normal water passing can still be achieved for the adjacent thin toothed sheets 2 through the spare water grooves 21.

The above descriptions are merely preferred embodiments of the present invention, and are not intended to limit the present invention. Any modifications, equivalent replacements, improvements, etc., made within the spirit and principle of the present invention shall be included in the protection scope of the present invention.

## Claims

1. A split-type chamfering device, comprising a base (1) and a plurality of thin toothed sheets (2), wherein all the thin toothed sheets (2) are fixedly spliced on a sidewall of a lower part of the base (1) to form a conical chamfering body; lower parts of all the thin toothed sheets (2) extend to a lower side of the base (1); one sides, close to the base (1), of the lower parts of all the thin toothed sheets (2) are abutted against one another; and a drainage groove (4) communicated with a water passage hole (3) inside the base (1) is formed between two adjacent thin toothed sheets (2).

2. The split-type chamfering device according to claim 1, wherein the sidewall of the base (1) is provided with insertion holes (5) for insertion of upper sides of the thin toothed sheets (2), and water supply grooves (6) communicating the water passage hole (3) with the drainage grooves (4) are disposed in positions on the sidewall of the base (1) corresponding to the lower sides of the insertion holes (5).

3. The split-type chamfering device according to claim 1, wherein a clamping block (7) is disposed on one side of the middle of the thin toothed sheet (2), and a clamping groove (8) is disposed at a position on the sidewall of the base (1) corresponding to the clamping block (7); a nut (11) is disposed at a position on the base (1) corresponding to upper sides of the thin toothed sheets (2) in a threaded sleeving manner, and the nut (11) presses upper ends of the thin toothed sheets (2) downward to fix the thin toothed sheets (2) at corresponding positions of the base (1).

4. The split-type chamfering device according to claim 1, wherein a drainage channel (9) being communicated with the water passage hole (3) and draining water outward is disposed in the lower part of the thin toothed sheet (2).

5. The split-type chamfering device according to claim 4, wherein the drainage channel (9) is a semi-circular hole, and there is a plurality of drainage channels (9) which are disposed in the lower part of the thin toothed sheet (2) in parallel with an axial direction and at upper and lower positions respectively.

6. The split-type chamfering device according to claim 1, further comprising a water blocking mechanism axially blocking cold water in the water passage hole (3) so that the cold water in the water passage hole (3) is radially drained to the drainage grooves (4) after passing through the water supply grooves (6), the water blocking mechanism being mounted on the base (1).

7. The split-type chamfering device according to claim 6, wherein the water blocking mechanism comprises a central shaft (10) and a blocking cover, wherein an upper end of the central shaft (10) is fixed in the water passage hole (3), a lower end of the central shaft (10) protrudes out of the water passage hole (3), and there is a gap between the central shaft (10) and an inner wall of the water passage hole (3); and the blocking cover is fixed to the lower end of the central shaft (10) and is attached to the thin toothed sheets (2) to axially block the cold water in the water passage hole (3).

8. The split-type chamfering device according to claim 7, further comprising a connector (12), wherein one end of the connector (12) is connected to a main shaft of a machine tool, the other end of the connector (12) is connected to one end of the base (1) away from the thin toothed sheets (2), and a water supply hole (13) communicating an external water source with the water passage hole (3) is disposed inside the connector (12).

9. The split-type chamfering device according to claim 8, wherein the upper end of the central shaft (10) extends inside the water supply hole (13), a screw hole (14) is horizontally disposed at a position inside the connector (12) corresponding to the upper end of the central shaft (10), and a screw pressing the upper end of the central shaft (10) to fix the central shaft (10) is disposed in the screw hole (14).

10. The split-type chamfering device according to claim 9, wherein a part of the upper end of the central shaft (10) corresponding to the screw is a plane structure.
